# EUROPÄISCHE PATENTANMELDUNG

(11) **EP 1 267 347 A1**
(43) Veröffentlichungstag der Anmeldung: **18.12.2002**
(21) Anmeldenummer: 02011251.2
(22) Anmeldetag: 22.05.2002
(51) Int. Cl.: G11B 20/10, H04N 7/24

(54) **Verfahren und Schaltungsanordnung zur Datenübertragung**

(30) Priorität: 16.06.2001 DE 10129108
(71) Anmelder: Harman/Becker Automotive Systems GmbH, 76307 Karlsbad (DE)
(72) Erfinder: Nitzpon, Hans-Jürgen, 76337 Waldbronn (DE); Klaus-Wagenbrenner, Jochen, 76571 Gaggenau (DE); Teichner, Detlef, Dr., 78126 Königsfeld (DE)
(74) Vertreter: Patentanwälte Westphal, Mussgnug & Partner

(57) **Zusammenfassung**

Bei einem Verfahren zur Datenübertragung wird die Abtastfrequenz der von einer DVD-Abspieleinheit in der Norm IEC 61937 gelieferten optischen oder elektrischen Signale in einem ersten Transkoder (T1) in die Abtastfrequenz eines Multimedianetzwerkes transformiert. Die vom ersten Transkoder (T1) erzeugten Signale mit der Abtastfrequenz des Multimedianetzwerks werden über eine Multimedianetzwerk-Leitung (M) zu einem zweiten Transkoder (T2) übertragen, der mittels der in den empfangenen Signalen enthaltenen Parametern das ursprünglich von der DVD-Abspieleinheit erzeugte Signal generiert und gemäß der Norm IEC 61937 zu einem DVD-Dekoder (D) überträgt. Das Verfahren ist besonders für den Einsatz in einem Fahrzeug geeignet und zeichnet sich durch geringen technischen Aufwand aus, denn ohne die Transkodierung mittels der beiden Transkoder (T1, T2) müßte der enkodierte Datenstrom am Ausgang der DVD-Abspieleinheit (A) dekodiert und anschließend mehrkanalig als lineare PCM-Daten über die Multimedianetzwerk-Leitung, z.B. eine MOST-Leitung (M), übertragen werden. Dies erfordert jedoch eine drei- bis viermal höhere Bandbreite. Außerdem müßten die PCM-Daten aus kopierrechtlichen Gründen erneut verschlüsselt werden.

## Beschreibung

Die Erfindung betrifft ein Verfahren zur Datenübertragung von einer Digital-Versatile-Disc-Abspieleinheit zu einem Digital-Versatile-Disc-Dekoder.

Die Erfindung betrifft weiter eine Schaltungsanordnung zur Datenübertragung von einer Digital-Versatile-Disc-Abspieleinheit zu einem Digital-Versatile-Disc-Dekoder.

Digital-Versatile-Disc-Abspieleinheiten, im weiteren Verlauf mit DVD-Abspieleinheit abgekürzt, sind mit einem digitalen Ausgang ausgerüstet, an dem elektrische oder optische Signale abnehmbar sind. An den digitalen Ausgang einer DVD-Abspieleinheit kann ein Audio-Dekoder, z. B. ein Dolby-Digital-, ein dts-, ein MPEG-, oder ein MLP-Dekoder, angeschlossen werden. Vom digitalen Ausgang einer DVD-Abspieleinheit werden unkodierte PCM-Stereo-Audio-Daten gemäß der Norm IEC 60958, oder encodierte Mehrkanal-Audio-Daten gemäß der Norm IEC 61937 zum Dekoder übertragen. Neben den Audiodaten sind in dem übertragenen Datenstrom auch Parametereinstellungen, sog. Header, für den Dekoder enthalten, wie z. B. die Abtastfrequenz der ursprünglichen Datenquelle. Der zu übertragende Datenstrom ist Biphasen-kodiert und an die Abtastfrequenz gekoppelt. Der Dekoder - die Datensenke - ist damit in der Lage, sich zu synchronisieren und die ursprüngliche Abtastfrequenz der Datenquelle zu rekonstruieren, die bei einer DVD-Abspieleinheit beispielsweise 48 KHz beträgt.

MOST, das als Abkürzung für Media Oriented System Transport oder Media Oriented Synchronous Transfer steht, ist die Bezeichnung für ein Multimedianetzwerk und einen Standard, die speziell für den Einsatz in Kraftfahrzeugen entwickelt wurden. Ein wesentliches Merkmal eines MOST-Netzwerks liegt darin, daß die Applikationsschicht von der Netzwerkschicht getrennt ist. MOST-Netzwerke arbeiten ebenfalls mit Biphasen-kodierten Daten. Die Übertragung der Daten erfolgt typischerweise mit einer Abtastfrequenz von 44,1 KHz.

Nähere Angaben über MOST-Netzwerke sind in: Ohne Digitalisierung kein Standard, Automobil-Entwicklung, Mai 2000, Seite 88-90 und in Media Oriented System Transport (MOST), Standard für Multimedianetworking im Fahrzeug, VDI Berichte Nr. 1415, 1998, Seite 819-834 beschrieben.

Es ist daher Aufgabe der Erfindung, ein Verfahren und eine Schaltungsanordnung zur Übertragung von Daten von einer DVD-Abspieleinheit zu einem DVD-Dekoder so zu gestalten, daß die Daten über eine Multimedianetzwerk-Leitung, wie z.B. MOST, übertragen werden können, dessen Übertragungsfrequenz sich von der der DVD-Abspieleinheit unterscheiden kann.

Verfahrensmäßig wird diese Aufgabe mit den im Anspruch 1 angegebenen Merkmalen dadurch gelöst, daß das Ausgangssignal der DVD-Abspieleinheit einem ersten Transkoder zugeführt wird, dessen Ausgangssignal über eine Multimedianetzwerk-Leitung zu einem zweiten Transkoder übertragen wird, dessen Ausgangssignal an den Eingang des DVD-Dekoders übertragen wird.

Schaltungsmäßig wird diese Aufgabe mit den im Anspruch 5 angegebenen Merkmalen dadurch gelöst, daß der Ausgang der DVD-Abspieleinheit mit dem Eingang eines ersten Transkoders verbunden ist, dessen Ausgang über eine Multimedianetzwerk-Leitung mit dem Eingang eines zweiten Transkoders verbunden ist, dessen Ausgang mit dem Eingang des DVD-Dekoders verbunden ist.

Das erfindungsgemäße Verfahren sieht vor, die von der DVD-Abspieleinheit gelieferten Signale der Norm IEC 61937 zu einem ersten Transkoder zu übertragen, der den von der DVD-Abspieleinheit empfangenen Datenstrom analysiert und die Abtastfrequenz ermittelt. Der erste Transkoder paßt nun die Abtastfrequenz an die des Standards des Multimedianetzwerks an, indem die Länge der im Datenstrom enthaltenen Pausenpakete verändert wird. Wenn z.B. die Abtastfrequenz der DVD-Abspieleinheit mit 48 KHz größer ist als die gemäß dem Standard des Multimedianetzwerks vorgeschriebene Abtastfrequenz von 44,1 KHz, streicht der erste Transkoder eine vorgebbare Anzahl von Nullen in den Pausenpaketen. Hierzu ist beispielsweise ein Phasenregelkreis im ersten Transkoder vorgesehen, der die Frequenz des von der DVD-Abspieleinheit gelieferten Biphasen-Signals von 48 KHz auf 44,1 KHz transformiert. Der vom ersten Transkoder erzeugte Datenstrom wird über eine Multimedianetzwerk-Leitung zum zweiten Transkoder übertragen, der mit Hilfe der im vom ersten Transkoder empfangenen Datenstrom enthaltenen Parametern wieder den von der DVD-Abspieleinheit erzeugten Datenstrom erzeugt. Die Übertragung der Daten von der DVD-Abspiel-einheit zum ersten Transkoder sowie vom zweiten Transkoder zum DVD-Dekoder erfolgt daher gemäß der Norm IEC 61937.

In einem Datenstrom gemäß der Norm IEC 61937 sind frei verfügbare Bits enthalten, die bei einem Ausführungsbeispiel der Erfindung für Steuerbefehle vorgesehen sind. Beispielsweise geben die frei verfügbaren Bits an, wieviele Nullen im Datenstrom zu streichen oder dem Datenstrom hinzuzufügen sind.

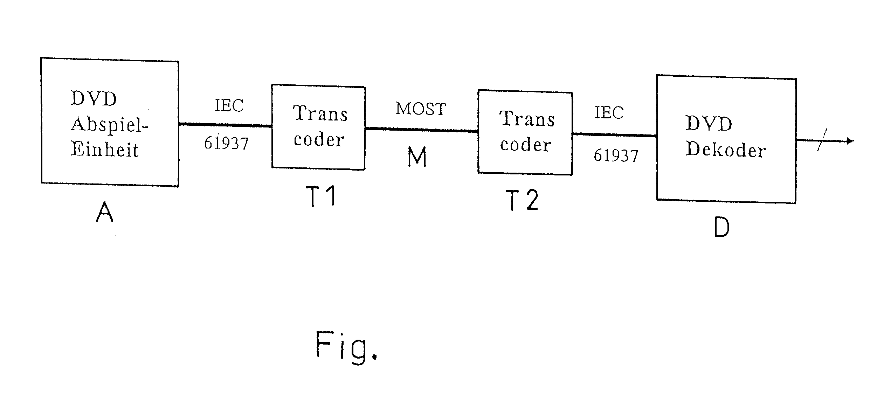

Anhand des in der Figur abgebildeten Ausführungsbeispiels wird die Erfindung näher beschrieben und erläutert.

Der Ausgang einer DVD-Abspieleinheit A ist mit dem Eingang eines ersten Transkoders T1 verbunden, dessen Ausgang über eine Multimedianetzwerk-Leitung M, z.B. eine MOST-Leitung, mit dem Eingang eines zweiten Transkoders T2 verbunden ist. Der Ausgang des zweiten Transkoders T2 ist mit dem Eingang eines DVD-Dekoders verbunden. Bei dem DVD-Dekoder kann es sich z. B. um einen Dolby-Digital-Dekoder, einen dts-Dekoder, einen MPEG-Dekoder, einen MLP-Dekoder oder einen anderen Mehrkanalaudio-Decoder handeln.

Der erste Transkoder T1 transformiert die Abtastfrequenz des von der DVD-Abspieleinheit A gelieferten Datenstromes in die für den Standard des Multimedianetzwerks erforderliche Abtastfrequenz. Je nachdem, ob die Abtastfrequenz der DVD-Abspieleinheit höher oder geringer ist als die des Multimedianetzwerks, entfernt der erste Transkoder T1 Nullen aus den Pausenpaketen oder fügt welche hinzu. Im Datenstrom, den der erste Transkoder über die Multimedianetzwerk-Leitung zum zweiten Transkoder T2 überträgt, sind Parameter enthalten, mittels denen der zweite Transkoder T2 das ursprünglich von der DVD-Abspieleinheit erzeugte Signal generiert. Dieses Signal wird gemäß der Norm IEC 61937 zum DVD-Dekoder D übertragen.

Das erfindungsgemäße Verfahren und die erfindungsgemäße Schaltungsanordnung sind insbesondere für den Einsatz in einem Fahrzeug geeignet, weil eine DVD-Abspieleinheit z.B. über ein MOST-Netzwerk an einen DVD-Dekoder angeschlossen werden kann. Ein weiterer Vorteil ist darin zu sehen, daß ohne die erfindungsgemäße Transkodierung mittels der beiden Transkoder der enkodierte Datenstrom an der Datenquelle - also in der DVD-Abspieleinheit - dekodiert und anschließend mehrkanalig als lineare PCM-Daten z.B. über ein MOST-Netzwerk übertragen werden. Hierfür ist aber eine drei- bis viermal höhere Busbandbreite als bei der Erfindung erforderlich. Außerdem müßten die PCM-Daten aus kopierrechtlichen Gründen erneut verschlüsselt werden, weil dekodierte Daten gem. Dolby oder dts nicht in einem offenen System übertragen werden dürfen. Die Erfindung zeichnet sich daher gegenüber den bekannten Verfahren und Anordnungen durch einen wesentlich geringeren technischen Aufwand aus, obwohl zwei Transkoder erforderlich sind.

### Bezugszeichenliste

- A: DVD-Abspieleinheit
- D: DVD-Dekoder
- M: Multimedianetzwerk-Leitung
- T1: Transkoder
- T2: Transkoder

## Patentansprüche

1. Verfahren zur Datenübertragung von einer DVD-Abspieleinheit (A) zu einem DVD-Dekoder (D),
**dadurch gekennzeichnet, daß** das Ausgangssignal der DVD-Abspieleinheit (A) einem ersten Transkoder (T1) zugeführt wird, dessen Ausgangssignal über eine Multimedianetzwerk-Leitung (M) zu einem zweiten Transkoder (T2) übertragen wird, und daß das Ausgangssignal des zweiten Transkoders (T2) dem Eingang des DVD-Dekoders (D) zugeführt wird.

2. Verfahren nach Anspruch 1,
**dadurch gekennzeichnet, daß** der erste Transkoder (T1) die Abtastfrequenz des von der DVD-Abspieleinheit gelieferten Datenstroms ermittelt und sie an die Abtastfrequenz der Multimedianetzwerk-Leitung (M) anpaßt, und daß der zweite Transkoder (T2) das von der DVD-Abspieleinheit (A) erzeugte Signal mittels im über die Multimedianetzwerk-Leitung (M) übertragenen Datenstrom enthaltenen Parametern erzeugt.

3. Verfahren nach Anspruch 2,
**dadurch gekennzeichnet, daß** der erste Transkoder (T1) zur Umsetzung der Abtastfrequenz die Länge der im von der DVD-Abspieleinheit (A) gelieferten Datenstrom enthaltenen Pausenpakete verändert.

4. Verfahren nach Anspruch 3,
**dadurch gekennzeichnet, daß** der erste Transkoder (T1) zur Umsetzung der Abtastfrequenz eine vorgebbare Anzahl digitaler Nullen in den Pausenpaketen streicht oder hinzufügt.

5. Schaltungsanordnung zur Datenübertragung von einer DVD-Abspieleinheit (A) zu einem DVD-Dekoder (D),
**dadurch gekennzeichnet, daß** der Ausgang der DVD-Abspieleinheit (A) mit dem Eingang eines ersten Transkoders (T1) verbunden ist, dessen Ausgang mit dem Eingang einer Multimedianetzwerk-Leitung (M) verbunden ist, und daß der Ausgang der Multimedianetzwerk-Leitung (M) mit dem Eingang eines zweiten Transkoders (T2) verbunden ist, dessen Ausgang mit dem Eingang des DVD-Dekoders (D) verbunden ist.

6. Verfahren nach einem der Ansprüche 1-4 oder Schaltungsanordnung nach Anspruch 5,
**dadurch gekennzeichnet, daß** im ersten Transkoder (T1) ein Phasenregelkreis zur Transformation der Frequenz eines Biphasensignals der DVD-Abspieleinheit (A) auf die Frequenz der Multimedianetzwerk-Leitung (M) vorgesehen wird bzw. ist.

7. Verfahren nach einem der Ansprüche 1-4 oder Schaltungsanordnung nach Anspruch 5 oder 6,
**dadurch gekennzeichnet, daß** die Datenübertragung von der DVD-Abspieleinheit (A) zum ersten Transkoder (T1) und vom zweiten Transkoder (T2) zum DVD-Dekoder (D) gemäß der Norm IEC 61937 vorgesehen wird bzw. ist.

8. Verfahren oder Schaltungsanordnung nach Anspruch 7,
**dadurch gekennzeichnet, daß** die gemäß der Norm IEC 61937 frei verfügbaren Bits für Steuerbefehle vorgesehen werden bzw. sind.

9. Verfahren oder Schaltungsanordnung nach Anspruch 8,
**dadurch gekennzeichnet, daß** die frei verfügbaren Bits angeben, wieviele Nullen in den Pausenpaketen des Datenstroms gestrichen oder hinzugefügt worden sind.

10. Verfahren oder Schaltungsanordnung nach einem der vorangehenden Ansprüche,
**dadurch gekennzeichnet, daß** für den DVD-Dekoder (D) ein Mehrkanalaudio-Dekoder vorgesehen wird bzw. ist.

11. Verfahren oder Schaltungsanordnung nach Anspruch 10
**dadurch gekennzeichnet, daß** für den DVD-Dekoder (D) ein Dolby-Digital-Dekoder, ein dts-Dekoder, ein MPEG-Dekoder oder ein MLP-Dekoder vorgesehen wird bzw. ist.

12. Verfahren oder Schaltungsanordnung nach einem der vorangehenden Ansprüche,
**dadurch gekennzeichnet, daß** für die Multimedianetzwerk-Leitung (M) eine MOST-Leitung vorgesehen wird bzw. ist.
